Europäisches Patentamt

European Patent Office

Office européen des brevets

(11) Publication number: **0 331 407**

**A2**

# EUROPEAN PATENT APPLICATION

(21) Application number: **89301945.5**

(22) Date of filing: **27.02.89**

(51) Int. Cl.⁴: **G06F 12/14**

(30) Priority: **29.02.88 JP 46304/88**

(43) Date of publication of application:
**06.09.89 Bulletin 89/36**

(84) Designated Contracting States:
**DE FR GB**

(71) Applicant: **HITACHI MAXELL LTD.**
**1-88 Ushitori-1-chome**
**Ibaraki-shi Osaka(JP)**

(72) Inventor: **Shinagawa, Toru**
**2-2-203, Togashira-1-chome**
**Toride-shi(JP)**

(74) Representative: **Williams, Trevor John et al**
**J.A. KEMP & CO. 14 South Square Gray's Inn**
**London WC1R 5EU(GB)**

(54) **IC card.**

(57) An IC card (10) has a processor (1) including an application program running signal generator (7) for generating a signal (9) indicating that an application program (42) is in operation and an inhibition address checker (5) for holding an address which is desired to be inhibited from being accessed or an address which is permitted to be accessed by the application program and producing an access inhibiting signal (8) when accessing is destined for the inhibition address. An access inhibition means (6) responds to both the application program running signal and access inhibiting signal to inhibit the processor from accessing the inhibition addresss when the application program is started or when it is under execution. Consequently, even in the event that the application program undergoes uncontrollable execution, access to addresses on a register (11) or a RAM (12) or the like storing system control information can be inhibited.

FIG. I

## IC CARD

## BACKGROUND OF THE INVENTION

This invention relates to an IC card having a system program and an application program, and more particularly to an improved IC card which can prevent destruction of system control information and the like due to uncontrollable execution of an application program stored in the IC card and avoid read-out of security information under the command of the application program.

Typically, the IC card incorporates an internal microprocessor, an internal memory and an internal interface for transmission and reception of data to and from an external apparatus. When the IC card is inserted in the external apparatus such as a host computer or an IC card reader/writer and placed in use, data transmission/reception is effected between the IC card and external apparatus in sequence in such a matter that a set of commands transmitted from the oxternal apparatus are decoded by an internal control program of the IC card, access to the memory, for example, write, read or erase of data is executed in accordance with an operation program stored in the memory, and results of the access execution are returned, as responses to the commands, to the external apparatus.

Conventionally, in this type of an IC card, a process program for the microprocessor is stored in a mask ROM the contents of which can not be changed. However, for example, JP-A-61-211788 discloses a proposal which can change the contents of the program by using an electrically erasable non-volatile memory (EEPROM) as a program memory.

Typically, in an IC card incorporating such an EEPROM and capable of rewriting its program, the system program in charge of control operations in the card is stored in a mask ROM which is not rewritable and the application program determined depending on an application is stored in the EEPROM.

Therefore, the whole of a memory area managed by the microprocessor can be accessed by the application program. In the event that the memory area which the system program is using or areas of registers operable to set hardware are accessed by the application program which undergoes uncontrollable execution, data stored in these areas will be destroyed and dangerously there is a possibility of a failure to operate of the IC card.

Also, there is a possibility that a bad person may read security information stored in the memory of the IC card by usig an application program and counterfeit an IC card.

## SUMMARY OF THE INVENTION

An object of this invention is to provide a highly reliable IC card which can prevent danger of a failure to operate of the IC card due to destruction of system control information and the like encountered in the prior art IC card and avoid the possibility that security information stored in the IC card may be read out.

According to the invention, the above object can be accomplished by an IC card having a processor, first memory means for storing a system program of the processor, second memory means for storing an application program, and third memory means, comprised of a rewritable non-volatile memory or a volatile memory, for storing various kinds of process data whereby data is transmitted and received to and from an external apparatus, the IC card comprising inhibition address checker means for deciding whether an accessing address issued from the processor is destined for an address value or an address range which should be inhibited from being accessed by the application program and producing an access inhibiting signal when accessing is decided to be inhibited, program running signal generator means for generating a running signal indicating that the application program is running, either when the application program is started or when the application program is under execution, and access inhibition means for responding to the access inhibiting signal when the running signal is present to inhibit the processor from accessing.

Thus, in order to inhibit access to memory by the application program, there are provided the application program running signal generator for generating a signal indicating that the application program is in operation and the inhibition address checker for holding an address which is desired to be inhibited from being accessed or an address which is permitted to be accessed by the application program and producing an access inhibiting signal when accessing is destined for the inhibition address, whereby the access inhibition means responds to both the application program running signal and access inhibiting signal to inhibit the processor from accessing the inhibition address when the application program is started or when it is under execution. Consequently, even in the event that the application program undergoes uncontrollable execution, access to addresses on a register or a RAM or the like storing the system control information can be inhibited. In addition, even if a bad person adds to the application program a program accessible to an address of security information stored in the IC card, access to that address by the application program can be inhibited. As a result, destruction of the system control information and pause of IC card operation can be prevented and besides read-out of the security information stored in the IC card can be prevented for avoidance of counterfeit of an IC card and for issuance of highly reliable IC cards.

## BRIEF DESCRIPTION OF THE DRAWINGS

Figure 1 is a block diagram illustrating an embodiment of an IC card according to the invention.

Figure 2 shows a memory map of an information storage used in the Fig. 1 IC card.

## DESCRIPTION OF THE PROFERRED EMBODIMENT

The invention will now be described by way of example with reference to the accompanying drawing.

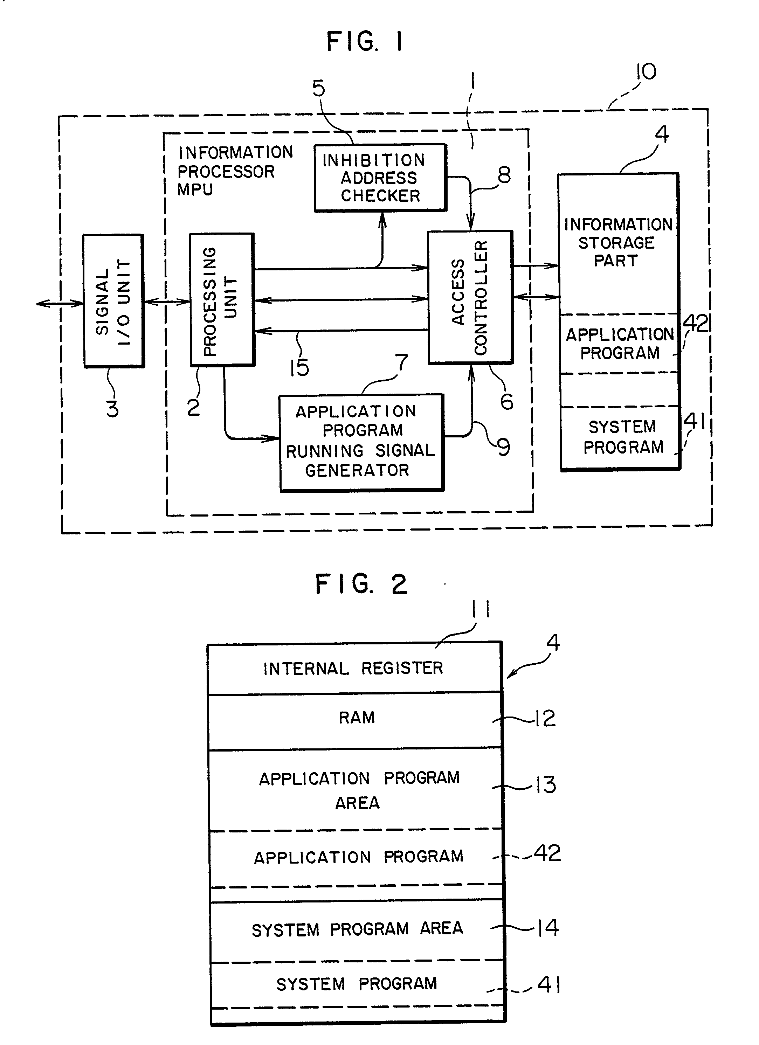

Fig. 1 illustrates, in block form, an IC card according to an embodiment of the invention and Fig. 2 shows a memory map on an information storage of the IC card.

Referring to Fig 1, an IC card 10 has an information processor (microprocessor or MPU) 1 and is inserted in an IC card reader/writer (or host computer) to transmit and receive data to and from the IC card read/writer. A control program, a fundamental process program and an operation program, which are required for the MPU 1, are stored in an information storage 4. The MPU 1 carries out the transmission and reception of data to and from the external apparatus through a signal input/output unit 3.

In normal operation, the MPU 1 executes given processings in accordance with a program stored in, for example, an EEPROM of the information storage 4 to temporarily store data, such as transferred data from the external apparatus, read-out data and resulting data, in a RAM of the information storage 4 and to transmit and receive data to and from the external apparatus such as IC card reader/writer.

The MPU 1 includes here, as function blocks, a processing unit 2, an inhibition address checker 5, an access controller 6 and an application program running signal generator 7. Part or the whole of these components may be realized with hardware · to take the form of circuits or may otherwise be realized with process programs corresponding to them and stored in the information storage 4. Alternatively, they may be realized using hardware ·

software in combination.

The inhibition address checker 5 holds a plurality of addresses between upper and lower limits of a range which is not permitted to be accessed by or under the instructions of an application program 42 stored in the information storage 4 and when receiving an address signal produced from the processing unit 2, it decides whether this address falls within the range defined by the upper and lower limit addresses. If the received address falls within the range, the devider 5 issues an access inhibiting signal 8 to the access controller 6. Values of the upper and lower limit addresses to be held in the inhibition address checker 5 can be stored or set, concurrently with storage of the application program 42 in the information storage 4, in a predetermined area of the information storage 4 and setting of these values may be changed.

The access controller 6 also receives address signals produced from the processing unit 2 and it delivers these signals to the information storage 4 when accessing should not be inhibited but stops the delivery when accessing should be inhibited. Access inhibition is set up by the access controller 6 when it responds to the access inhibiting signal 8 from the inhibition address checker 5 while it is receiving or has received from the application program running signal generator 7 a signal indicating that the application program is in operation, that is, an application program running signal 9 and under the access inhibition condition, the transmission of address signals from processing unit 2 to information storage 4 is stopped. At the same time, the access controller 6 issues an abnormal access signal 15 to the processing unit 2.

The application program running signal generator 7 is operable to generate the application program running signal 9 and send it to the access controller 6 when the application program 42 is started by or under the instructions of a system program 41.

The information storage 4 is a memory allocated to an address space accessible by the MPU 1 and has an address space to which an internal register 11, a RAM 12, an application program area 13 and a system program area 14 are allocated as shown in Fig. 2. The application program area 13 is formed of an EEPROM and data or program written in this area is rewritable. In contrast, the system program area 14 is formed of a mask ROM and data or program written in this area is not rewritable.

In the areas thus allocated to the address space of the memory the system program 41 is initially stored in the system program area 14 but any application program has not been stored yet. Under this condition, the MPU 1 uses the system program 41 to receive, from the external apparatus and through the signal input/outut unit 3, an application program 42 and store it in the application program area 13. so that the application program 42 which is selected to comply with an intended application can be loaded on the information storage. In this manner, an IC card complying with the intended application can thus be prepared.

Thereafter, the application program 42 is started to initiate operations complying with the intended application. However, in the event that because of a bug in the application program 42 or variation in a power supply voltage, erroneous opeations take place, some addresses in the information storage 4 that are not expected to be accessed are accessed to disadvantage.

The information storage 4 contains, as shown in Fig. 2, the internal register 11 for controlling various components of the IC card 10 and the RAM 12 used as working area during processing and if the contents of the internal register 11 or RAM 12 is rewritten by erroneous operation of the MPU 1 which is caused intentionally or accidentally under the execution of the application program, the status set by the system program 41 changes, resulting in abnormal operation of the system program 41 and giving rise to possibility of a failure to operate of the IC card.

In addition, if a bad person propares an application program to read security information usually stored in the information storage of an IC card, there is a possibility that an IC card may be counterfeited.

In such an event, in accordance with the present embodiment, access to the information storage 4 can be inhibited by the access controller 6 according to the following procedure and the previously-described unwanted rewrite or read-out operation can be prevented.

More specifically, since the inhitition address checker 5 holds (regisers) addresses which are desired to be inhigited from being accessed by the application programs, an access inhibiting signal 8 is first issued once the previous-described phenomenon occurs. On the other hand, the application program 42 has been started by the system program 41 and the application program running signal 9 has been produced form the application program running signal generator 7. Therefore, the access controller 6 now receiving the application program running signal 9 and access inhibiting signal 8 detects that access destined for an inhibited address takes place under the execution of the application program and at that time it prevents access to the information storage 4 and issues the abnormal access signal 15 to the processing unit 2.

The processing unit being in receipt of the abnormal access signal 15 stops the execution of the application program 42 and issues a signal to this effect to the external apparatus or sets a flag to this effect in a specified memory area.

In this manner, by merely holding in the inhibition address checker 5 addresses for which access is prevented from being destined, any one of the inhibited addresses can be prevented from being accessed and destruction of the system control information and the like can be prevented. Since the access inhibition range or upper and lower limit address values defining the access inhibition range or an inhibition address value, these parameters being held in the inhibition address decider 5, should not be rewritten, they are allocated to an address space which is not permitted to be accessed by the application program 42. These address values may be stored in a RAM or the like so that their setting can be changed or may be stored in, for example, a writable non-volatile memory so that the values once set can not be changed. Alternatively, the address values may be set during manufacture of IC's and fixed to be unchangeable after setting. The access inhibition may be directed to a single address range defined by upper and lower limit values or alternatively to a single address point. Further, a plurality of inhibition address ranges or a plurality of inhibition address points may be set and stored. Thus, the number of the ranges or points may be determined as desired.

In the present embodiment, an address destined for an address which is inhibited from being accessed is decided and an inhibition signal is issued but conversely, a range of addresses which are permitted to be accessed may be stored and an address may be decided whether to be destined for an address falling within the permissible range, so that an access inhibition signal may be issued when the destination of the address is outside the range.

When the processing unit 2, inhibition address checker 5, access controller 6 and application program running signal generator 7 described so far are realized with software, signals may be transmitted by, for example, setting a flag in specified one of the allotted areas on the memory and a signal receiver may decide whether a flag is set in its own allotted area.

As described above, the present invention directed to inhibition of accessing by the application program comprises the application program running signal generator for generating a signal indicating that the application program is in operation and the inhibition address checker for holding an address which is for example to be inhibited from being accessed or permitted to be accessed under the command of the application program and producing an access inhibiting signal when an inhibited address is accessed, whereby the application program running signal cooperates with the access inhibiting signal to prevent accessing by the processor to an inhibited address when the application program is started or when it is under execution. Therefore, even in an event of the occurrence of uncontrollable execution of the application program, access to addresses on the register or a RAM and the like storing the system control information under the instructions of the application program can be inhibited. In addition, even if a bad person adds to the application program a program accessible to an address of security information stored in the IC card, access to that address under the command of the application program can be inhibited. Consequently, destruction of the system control formation and pause of IC card operation can be prevented and besides read-out of the security information stored in the IC card can be prevented for avoidance of counterfeit of an IC card and for issuance of highly reliable IC cards.

## Claims

1. An IC card (10) having a processor (1), first memory means (14) for storing a system program (41) of said processor, second memory means (13) for storing an application program (42), and third memory means (11, 12), comprised of a rewritable non-volatile memory or a volatile memory, for storing various kinds of process data whereby data is transmitted and received to and from an external apparatus, said IC card comprising inhibition address checker means (5) for deciding whether an accessing address issued from said processor is destined for an address value or an address range which should be inhibited from being accessed by the application program and producing an access inhibiting signal (8) when accessing is decided to be inhibited, program running signal generator means (7) for generating a program running signal (9) indicating that the application program is in operation, when the application program is started or the application program is under execution, and access inhibition means (6) for responding to the access inhibiting signal when the program running signal is present to inhibit said processor from accessing said second memory means or said third memory means.

2. An IC card according to Claim 1 wherein said inhibition address checer means holds an address value or address range which should not be accessed under the execution of the application program, said address value or address range being stored in any one of said first, second and third memory means.

3. An IC card according to Claim 1 wherein said inhibition address checker means holds an address value or address range which should be permitted to be accessed under the execution of the application program, said address value or address range being stored in any one of said first, second and third memory means.

4. An IC card according to any one of Claims 1 to 3 wherein said third memory means is a rewritable non-volatile memory, and at least two of said first, second and third memory means are allocated to divided areas of a single rewritable non-volatile memory.

5. An IC card (10) having a processor (1), a signal input/output unit (3) through which said processor transmits and receives data to and from an external apparatus, first memory means (14) for storing a first program (41) used to operate said processor, second memory means (13) for storing a second program (42) which is received by said processor from said external apparatus through said signal input/output unit under the instructions of said first program, and third memory means (11, 12) for storing process data processed by said processor and data necessary for normal operation of said processor whereby said processor is operable under the instructions of said second program stored in said second memory means, said IC card comprising inhibition address setting means (4) for setting an address value which should be inhibited from being accessed by said second program, and access inhibition means (6) for inhibiting said processor from accessing when under the operation of said second program an accessing address issued from said processor is destined for the address value which is set in said inhibition address setting means and which should be inhibited from being accessed by said second program.

6. An IC card according to Claim 5 wherein said third memory means is comprised of an internal register, a RAM and an EEPROM.

7. An IC card according to Claim 5 wherein said first memory means comprises a mask ROM.

8. An IC card according to Claim 6 wherein a first program storage area of said first memory means, a second program storate area of said second memory means and said internal register and RAM of said third memory means are allocated to an address space to which said processor is accessible.

9. An IC card according to Claim 5 wherein said first program is a system program for said processor and said second program is an application program for said processor.

10. An IC card according to Claim 9 wherein said first memory means comprises an EEPROM.

11. An IC card according to Claim 5 further comprising inhibition address checker means (5) for deciding whether the accessing address from said processor is the address value which is set in said inhibition address setting means and which should be inhibited from being accessed by said second program, and second program running detecting means (7) for detecting that said second program is in operation, said access inhibition means (6) being operable to inhibit said processor from accessing on the basis of results of decision by said inhibition address checker means and results of detection by said second program running detecting means.

12. An IC card according to Claim 11 wherein said inhibition address checker means produces an access inhibiting signal (8) when deciding that the accessing address from said processor is the address value which is set in said inhibition address setting means and which should be inhibited from being accessed by said second program, said second program running detecting means produces a program running signal (6) when detecting that said second program is in operation, and said access inhibition means inhibits said processor from accessing when the access inhibiting signal and the program running signal are both present.

## FIG. 1

## FIG. 2